Europäisches Patentamt

European Patent Office

Office européen des brevets

(19)

(11) EP 0 484 212 B1

(12) FASCICULE DE BREVET EUROPEEN

(45) Date de publication et mention
de la délivrance du brevet:
24.07.1996 Bulletin 1996/30

(51) Int Cl.⁶: G08C 15/00, B60R 16/02

(21) Numéro de dépôt: 91402854.3

(22) Date de dépôt: 25.10.1991

(54) **Dispositif de reconnaissance d'adresses pour module électronique de traitement de données**

Adressenerkennungsvorrichtung für elektronischen Datenverarbeitungsmodul

Address recognition device for electronic data processing module

(84) Etats contractants désignés:
BE DE ES GB IT

(30) Priorité: 30.10.1990 FR 9013436

(43) Date de publication de la demande:
06.05.1992 Bulletin 1992/19

(73) Titulaire: **REGIE NATIONALE DES USINES
RENAULT S.A.**
**F-92109 Boulogne Billancourt Cédex (FR)**

(72) Inventeurs:
• **Mercier, Olivier**
**F-94270 Le Kremlin Bicetre (FR)**
• **Artur, Philippe**
**F-92800 Puteaux (FR)**

(56) Documents cités:
EP-A- 0 327 456          FR-A- 2 578 070
FR-A- 2 639 778

• **ELEKTRONIK. vol. 39, no. 12, 8 Juin 1990,
MUNCHEN DE pages 109 - 114;
K,ETSCHBERGER ET AL: 'Vom Auto in die
Industrie. CAN-ein Buskonzept für den
industriellen'**

## Description

La présente invention est relative à un dispositif de reconnaissance d'adresses pour module électronique de traitement de données transmises suivant un protocole prédéterminé, sous forme de trames de signaux numériques comportant notamment un champ identificateur contenant une adresse et un champ de données. Plus particulièrement, l'invention concerne un tel dispositif conçu pour faire partie de modules électroniques interconnectés dans un réseau local de communications multiplexées embarqué dans un véhicule automobile. Le document FR-A-2 578 070 divulgue un tel dispositif.

Un développement actuel important de l'électronique automobile tient dans l'étude du remplacement du câblage électrique classique par un bus d'alimentation électrique et par un bus de transmission de données interconnectant des modules électroniques de commande d'actionneurs ou d'acquisition de signaux reçus de capteurs. L'avant-projet de norme française R13-708 correspondant au document de travail référencé ISO/TC22/SC3/WG1 publié par l'International Standardization Organization, définit l'architecture générale d'un réseau de communication dit "VAN", embarqué dans un véhicule automobile.

Cet avant-projet de norme définit une trame de signaux numériques dite "trame MAC" comportant un certain nombre de champs, les signaux constituant la trame faisant l'objet d'une transmission série sur un bus bifilaire interconnectant différents modules électroniques échangeant de telles trames. Une trame comporte divers champs comprenant chacun un nombre de bits déterminé, la trame étant elle-même ordonnée et transmise suivant un protocole fixé.

Une trame MAC contient d'abord un champ délimiteur de début de trame SOF et un champ "identificateur" IDEN utilisé pour préciser l'objet émis dans la trame ou l'objet interrogé (voir ligne DI, figure 3 du dessin annexé). Il s'agit donc, suivant une terminologie plus générale, d'une adresse. Ce champ identifie le ou les modules auxquels la trame de signaux est destinée. Il est constitué par une séquence d'éléments binaires. La trame de signaux comprend ensuite un champ de commande à quatre bits constitué d'un bit d'extension EXT réservé à une utilisation potentielle, d'un bit de "demande d'acquittement" RAK qui détermine si un module émetteur demande ou non à un module récepteur un accusé de réception d'une trame correctement reçue, un bit de lecture/écriture R/W qui indique si la trame émise est une demande de lecture ou d'écriture et d'un bit de demande de transmission directe (RTR).

Le champ de commande COM est suivi dans la trame par un champ de données DAT comportant un nombre entier d'octets. Ces données sont destinées à un ou plusieurs modules déterminés par l'identificateur placé en tête de la trame. La trame est complétée par divers champs accessoires dont on trouvera le détail dans l'avant-projet de norme précitée.

Des structures matérielles de modules électroniques conçues pour faire partie d'un réseau de communications multiplexées utilisant de telles trames de signaux sont décrites notamment dans les demandes de brevet français No. 89 14770, 90 00912, 9002570, et 90 02571. En référence à la figure 1 du dessin annexé où l'on a représenté la structure d'une interface de communication entre un bus de données et la partie "application" d'un tel module, il apparaît que cette interface comprend essentiellement un émetteur/récepteur différentiel de ligne, et un contrôleur de protocole.

Le bus de données du réseau est bifilaire et transmet des signaux analogiques différentiels constitués par une tension signée entre les fils référencés DATA et $\overline{DATA}$, suivant la terminologie de l'avant-projet de norme précitée , le signe de la tension étant représentatif d'un état logique binaire.

La partie émettrice de l'émetteur/récepteur de ligne assure la conversion des données émises DE entrant par une ligne unipolaire, en signaux différentiels de tension adaptés au bus (DATA, $\overline{DATA}$). La partie réceptrice transmet à un contrôleur de protocole des données DR reçues du bus, après correction éventuelle comme décrit dans la demande de brevet français 89 14770 précitée, du 10 novembre 1989.

Le contrôleur de protocole vérifie la nature des informations DR provenant de l'émetteur/récepteur de ligne, s'assure que les messages reçus respectent le protocole défini, gère les priorités, vérifie que les messages émis vers un autre module arrivent à destination, sérialise et met en forme suivant le protocole les informations DE à émettre, désérialise les informations reçues en vue de leur exploitation dans l'application. Cette application consiste en une commande d'un actionneur ou d'un capteur, commande associée à des échanges d'informations bidirectionnels avec ceux-ci, organisés suivant les trames de signaux décrites ci-dessus.

Un ensemble multiplexé comprend classiquement plusieurs modules électroniques tel que celui décrit ci-dessus, interconnectés entre eux et avec une ou plusieurs unités centrales de traitement, par l'intermédiaire du bus bifilaire. Chaque module commande ainsi une ou plusieurs applications regroupées localement dans le véhicule (commande de feux, de planche de bord, etc...).

Chaque module doit alors être capable de reconnaître des trames de signaux comportant des identificateurs (ou adresses) différents, destinées à des applications différentes regroupées dans le module.

Suivant une technique actuelle, la reconnaissance d'identificateurs est organisée dans le contrôleur de protocole. Cette reconnaissance s'opère par comparaison entre le champ identificateur contenu dans une trame avec un ou plusieurs identificateurs mis en mémoire permanente dans le contrôleur.

On a reconnu cependant un besoin pour un contrôleur de protocole à capacité étendue de mémorisation d'identificateurs, notamment en matière de modification ou de généralisation des identificateurs reconnus par un module. La mémorisation permanente de ces identificateurs ne procure évidemment aucune souplesse à cet égard. Une telle souplesse permettrait cependant de disposer de contrôleurs de protocole programmables "en bord de chaîne" de montage du module sur un véhicule automobile, ce qui simplifierait la gestion des stocks des modules équipés de tels contrôleurs.

On pourrait en outre réaliser plus simplement, avec une telle possibilité de programmation, des "analyseurs de réseaux", outils de diagnostic ou d'auscultation nécessaires à l'étude ou à la réparation du réseau. Un tel outil de diagnostic doit en effet pouvoir être programmable et reprogrammable avec des identificateurs variés correspondant à des adresses d'application à reconnaître.

Une première solution à ce problème de programmation consiste à modifier le contrôleur de protocole de manière à lui incorporer des moyens de mémoire d'identificateurs programmables et reprogrammables à volonté. Une telle solution est cependant incompatible avec la nécessité de conserver au contrôleur de protocole un coût de fabrication bas, comme il sied pour un matériel destiné à des véhicules automobiles de grande diffusion.

La présente invention a donc pour but de réaliser un dispositif de reconnaissance d'adresses pour module électronique de traitement de données transmises suivant un protocole prédéterminé vérifié par un contrôleur de protocole, qui dispose d'une capacité de programmation souple des identificateurs à reconnaître, sans grever le coût de fabrication du contrôleur.

On atteint ce but de l'invention, ainsi que d'autres qui apparaîtront dans la suite de la présente description, avec un tel dispositif dans lequel les données sont transmises sous forme de trames de signaux numériques comportant un champ identificateur contenant une adresse et un champ de données. Suivant l'invention le dispositif comprend un organe de sélection d'identificateur extérieur au contrôleur de protocole, des moyens de liaison entre le contrôleur de protocole et l'organe de sélection pour charger l'organe avec le champ identificateur d'une trame de signaux examinée dans le contrôleur, une mémoire vive prévue dans l'organe de sélection pour être chargée avec un ou plusieurs identificateurs prédéterminés à reconnaître et des moyens de comparaison des identificateurs reçus et des identificateurs mis en mémoire pour former un signal destiné au contrôleur de protocole et représentatif de ce qu'un champ reçu est reconnu ou non.

On ajoute ainsi au dispositif une possibilité de programmation d'adresses sans modifier sensiblement le contrôleur de protocole dont le coût de fabrication peut rester réduit, comme on le verra plus loin.

Suivant une autre caractéristique de la présente invention, les moyens de liaison établissent une liaison série entre le contrôleur de protocole et l'organe de sélection d'identificateur. Une telle liaison est peu coûteuse en broche et contribue donc à contenir les coûts de fabrication-du contrôleur de protocole.

Suivant une autre caractéristique avantageuse de l'invention, utilisable avec des trames de signaux comprenant, entre le champ identificateur et le champ de données, un champ contenant un bit significatif d'une demande d'acquittement de la trame, formulée par l'émetteur de la trame, les moyens de liaison transmettent ce champ avec le champ identificateur dans l'organe de sélection, l'organe de sélection comprenant des moyens de reconnaissance de l'état du bit de demande d'acquittement et des moyens de transmission au contrôleur de protocole d'un signal représentatif de cet état.

Comme on le verra plus loin, cette disposition permet d'incorporer le dispositif à un outil de diagnostic de l'état d'un réseau de communications multiplexées tel que le réseau VAN. Il faut alors pouvoir désactiver la fonction "demande d'acquittement" définie dans l'avant-projet de norme VAN précitée, de manière à ne pas perturber les communications dans le réseau. Dans cette application, le dispositif comprend alors des moyens pour forcer le signal transmis au contrôleur de protocole dans l'état qui correspond à une absence de demande d'acquittement d'une trame de signaux, quel que soit l'état du bit de demande d'acquittement d'une trame de signaux transmis par le contrôleur de protocole à l'organe de sélection.

D'autres caractéristiques et avantages de la présente invention apparaîtront à la lecture de la description qui va suivre et à l'examen du dessin annexé dans lequel :

- La figure 1 est un schéma du dispositif suivant l'invention, incorporé à une interface de communication d'un module de traitement de données formant partie d'un réseau de communication VAN décrit en préambule de la présente description,
- la figure 2 est un schéma plus détaillé des liaisons établies entre le contrôleur de protocole et l'organe de sélection d'identificateur du dispositif suivant l'invention, et
- la figure 3 est un diagramme temporel des signaux échangés entre le contrôleur de protocole et l'organe de sélection d'identificateur représentés à la figure 2.

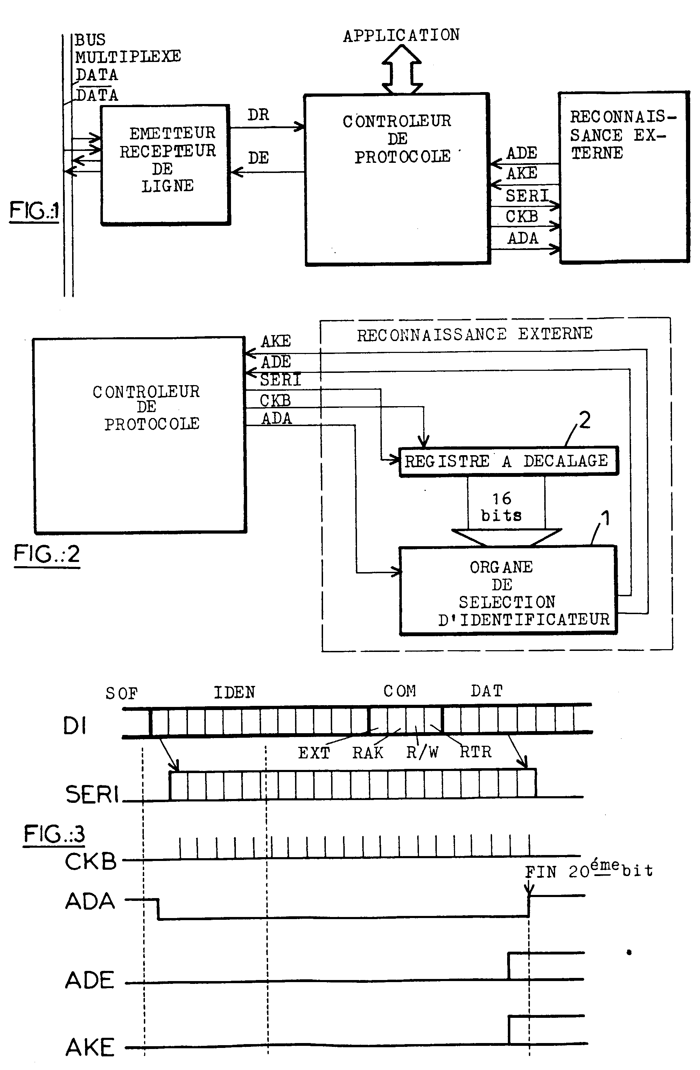

On se réfère à la figure 1 du dessin annexé où l'interface représentée comprend essentiellement, comme on l'a vu plus haut, un émetteur/récepteur de ligne et un contrôleur de protocole, pour assurer des transmissions de données suivant des trames de signaux au format VAN entre un bus bifilaire (DATA,$\overline{\text{DATA}}$) et une "application", commande d'actionneurs ou écoute de capteurs, par exemple.

Suivant l'invention, on remplace la reconnaissance d'adresses (champ identificateur de la trame) classiquement opérée dans le contrôleur de protocole, par une "reconnaissance externe" qui, comme on le verra plus loin, donne de la souplesse au dispositif suivant l'invention en matière de programmation des adresses à reconnaître, ceci sans modifier sensiblement les coûts de fabrication du contrôleur de protocole, conformément au but poursuivi par la présente invention. Un contrôleur classique est chargé en mémoire morte, lors de sa fabrication, de quelques adresses à reconnaître, au plus. Il n'est donc pas possible de le programmer ultérieurement ou de le reprogrammer.

Sur la figure 2 du dessin annexé, il apparaît que les moyens de reconnaissance externe comprennent essentiellement un organe de sélection d'identificateur 1 interconnecté avec le contrôleur de protocole par des moyens de liaison comprenant un registre à décalage 2 et diverses lignes ADA, CKB, SERI, ADE et AKE assurant des commandes et des échanges d'informations entre le contrôleur de protocole, le registre et l'organe de sélection. Les signaux circulant sur ces lignes sont schématisés dans le diagramme temporel de la figure 3.

Sur cette figure, on a représenté aussi une partie d'une trame de signaux DI au format VAN décrit en préambule de la présente description, trame reçue du bus (DATA, $\overline{DATA}$) par le contrôleur de protocole, à travers la partie réceptrice de l'émetteur/récepteur de ligne. On reconnaît dans cette partie, après le champ SOF de début de trame, un champ identificateur IDEN à douze bits, un champ COM à quatre bits et un champ de données partiellement représenté. L'invention s'intéresse principalement au champ identificateur IDEN et au champ COM.

Suivant l'invention, le contrôleur de protocole comprend une broche de sortie connectée par une ligne SERI à l'entrée du registre à décalage 2. Sur cette broche de sortie, sont transmis en série, avec un léger retard dû au temps de transmission, les bits du champ IDEN et, éventuellement, comme on le verra plus loin, ceux du champ COM. Le dispositif comprend en outre un générateur d'impulsions d'horloge connecté par une ligne CKB à l'entrée d'horloge du registre 2, pour rythmer l'entrée en série des bits des champs considérés.

Le contrôleur de protocole comprend encore des moyens de génération d'un signal ADA, commandant l'activation et la désactivation de l'organe de sélection d'identificateur 1. Cet organe comprend une entrée parallèle connectée à la sortie du registre à décalage 2 et deux sorties pour des signaux ADE et AKE respectivement, transmis au contrôleur de protocole. La nature et le rôle de ces signaux sont expliqués dans la suite.

Il apparaît maintenant que le rôle du registre à décalage 2 est de fournir à l'organe de sélection 1, suivant une transmission parallèle à 16 bits par exemple, des signaux de trame désérialisés sous la commande d'un signal d'horloge CKB fourni par le contrôleur de protocole au registre.

Le rôle essentiel de l'organe de sélection 1 est de comparer les bits d'un champ identificateur ainsi désérialisé à des bits correspondant d'une ou plusieurs adresses enregistrées dans une mémoire vive (non représentée) de l'organe.

Des moyens de comparaison (non représentés) sont donc prévus à cet effet dans cet organe et forment un signal logique ADE transmis au contrôleur de protocole par la ligne correspondante pour l'informer du résultat de la comparaison. Suivant l'état logique de ce signal, le contrôleur de protocole est informé de la présence ou de l'absence, dans le champ identificateur de la trame analysée, d'une adresse correspondant à une application commandée par un module de traitement de données comprenant l'interface de communication modifiée suivant la présente invention.

Comme illustré sur la figure 3, le signal logique ADA commande l'activation de l'organe de sélection 1 par un front descendant et la désactivation de cet organe par un front montant. Ces deux fronts sont séparés d'un temps suffisant à la transmission du champ IDEN (douze bits) et, comme on le verra plus loin, du champ COM (quatre bits). A titre d'exemple, le signal ADA remonte à la vingtième impulsion de l'horloge CKB. A ce moment, le signal ADE est déjà remonté au niveau 1 (voir figure 3) si une adresse a été reconnue. L'échantillonnage du signal ADE par le contrôleur de protocole à la fin du vingtième bit de la trame permet donc au contrôleur de protocole de prendre en compte une trame de signaux, si l'adresse contenue dans le champ identificateur a été reconnue.

L'organe de sélection 1, constitué essentiellement d'une mémoire vive et d'un comparateur, peut être réalisé simplement à l'aide d'un réseau logique programmable du commerce, connu sous le nom de PAL ou EDLP. Un tel réseau prend la forme d'un circuit intégré bon marché comprenant des broches permettant de programmer et reprogrammer des adresses mises en mémoire, conformément à un objectif important de la présente invention. Il est alors possible de programmer un module comprenant le dispositif selon l'invention et destiné à faire partie d'un réseau VAN embarqué dans un véhicule automobile, en bord de chaîne, ce qui accroît beaucoup la souplesse d'utilisation du module, par rapport aux'modules classiquement programmés de manière permanente en cours de fabrication.

Suivant une autre caractéristique importante du dispositif selon l'invention, l'organe de sélection 1 est aussi utilisé pour l'exploration du champ COM. Comme défini dans l'avant-projet de norme VAN précitée, ce champ comprend des bits EXT et RAK, R/W et RTR dont les rôles sont explicités dans ce document. L'invention s'intéresse plus particulièrement au bit RAK de "demande d'acquittement". Ce bit détermine si un module émetteur de trame demande ou non à un module récepteur de lui acquitter la trame correctement reçue, suivant une procédure décrite dans l'avant-projet de norme.

Les moyens de comparaison prévus dans l'organe de sélection 1 peuvent être utilisés pour reconnaître l'état du bit RAK et transmettre cette information essentielle au contrôleur de protocole par la ligne AKE, pour exploitation par ce contrôleur.

Avec cette structure, il est possible d'utiliser le contrôleur de protocole décrit, aussi bien dans un module de traitement de données quelconque formant partie d'un réseau VAN que dans un outil de diagnostic et d'auscultation du réseau. Cet outil, ou "analyseur de réseau" peut être utilisé aussi bien au garage pour des tests que pour des études à mener sur le réseau. Il doit être capable d'échanger des trames de signaux au format VAN avec tout module appartenant au réseau. A cet effet, il est équipé d'une interface de communication comprenant le dispositif suivant l'invention qui autorise la programmation et la reprogrammation d'adresses, pour permettre des échanges de trames avec divers modules à étudier. Un tel outil ne doit cependant jamais acquitter une trame de signaux reçus, sous peine de perturber l'état du bus et donc les observations à faire. Dans ce cas, suivant l'invention, des moyens (non représentés) sont prévus dans l'organe de sélection 1 pour bloquer la ligne AKE à l'état logique qui correspond à l'absence de demande d'acquittement. La structure décrite se prête ainsi aussi bien à une incorporation dans un module où des demandes d'acquittement doivent être transmises que dans un "analyseur de réseau" où ces demandes d'acquittement doivent être bloquées, ce qui donne au dispositif suivant l'invention un caractère universel, dans le cadre des réseaux VAN.

Le dispositif atteint donc bien les objectifs de souplesse et d'universalité recherchés. Un coût de fabrication bas est obtenu par l'utilisation de réseaux PAL ou EDLP. On remarquera en outre à cet égard que la liaison SERI établie entre le contrôleur de protocole et le registre à décalage est particulièrement économique car elle n'utilise qu'une broche. On sait qu'en électronique automobile de grande diffusion, des économies sur le nombre des broches des circuits sont précieuses pour limiter les coûts de fabrication. En liaison parallèle il faudrait seize broches pour transmettre les bits des champs IDEN et COM. Avec l'invention cinq broches suffisent (ADA, CKB, SERI, ADE, AKE).

Bien entendu l'invention n'est pas limitée au mode de réalisation décrit et représenté qui n'a été donné qu'à titre d'exemple. Ainsi l'invention pourrait être mise en oeuvre dans un réseau multiplexé autre que le réseau VAN.

**Revendications**

1. Dispositif de reconnaissance d'adresses pour module électronique de traitement de données transmises suivant un protocole prédéterminé vérifié par un contrôleur de protocole, sous forme de trames de signaux numériques comportant un champ identificateur contenant une adresse et un champ de données, caractérisé en ce qu'il comprend un organe de sélection d'identificateur (1) extérieur au contrôleur de protocole, des moyens de liaison (2) entre le contrôleur de protocole et l'organe de sélection pour charger l'organe avec le champ identificateur d'une trame de signaux examinée dans le contrôleur, une mémoire vive prévue dans l'organe de sélection (1) pour être chargée avec un ou plusieurs identificateurs prédéterminés à reconnaître et des moyens de comparaison des identificateurs reçus et des identificateurs mis en mémoire pour former un signal (ADE) destiné au contrôleur de protocole et représentatif de ce qu'un champ reçu est reconnu ou non.

2. Dispositif conforme à la revendication 1, caractérisé en ce que les moyens de liaison établissent une liaison série (SERI) entre le contrôleur de protocole et l'organe de sélection d'identificateur.

3. Dispositif conforme à la revendication 2, caractérisé en ce que la liaison série comprend un registre à décalage (2) intermédiaire qui désérialise les signaux reçus pour charger l'organe de sélection (1) par une liaison parallèle.

4. Dispositif conforme à la revendication 3, caractérisé en ce que le contrôleur de protocole comprend des moyens de génération d'un signal d'horloge (CKB) qui rythme le chargement du registre à décalage.

5. Dispositif conforme à l'une quelconque des revendications 1 à 5, utilisé avec des trames de signaux comprenant, entre le champ identificateur et le champ de données, un champ (COM) contenant un bit (RAK) significatif d'une demande d'acquittement de la trame, formulée par l'émetteur de cette trame, caractérisé en ce que les moyens de liaison transmettent le champ (COM) avec le champ identificateur dans l'organe de sélection, l'organe de sélection comprenant des moyens de reconnaissance de l'état du bit (RAK) et des moyens de transmission au contrôleur de protocole d'un signal (AKE) représentatif de cet état.

6. Dispositif conforme à la revendication 5, caractérisé en ce qu'il comprend des moyens pour forcer le signal (AKE) dans l'état qui correspond à une absence de demande d'acquittement d'une trame de signaux, quel que soit l'état du bit (RAK) de demande d'acquittement d'une trame de signaux transmise par le contrôleur de protocole.

7. Dispositif conforme à l'une quelconque des revendications 1 à 6, caractérisé en ce que le contrôleur de protocole comprend des moyens de génération d'un signal (ADE) d'activation du chargement de la trame dans l'organe de sélection et de désactivation de ce chargement après chargement d'un nombre prédéterminé de bits de cette trame correspondant au moins au champ identificateur.

8. Dispositif conforme à la revendication 7 prise en combinaison avec la revendication 5, caractérisé en ce que le signal (ADE) désactive le chargement après la transmission du champ (COM).

**Patentansprüche**

1. Vorrichtung zur Adressenerkennung für ein elektronisches Datenverarbeitungsmodul, wobei die Daten gemäß einem vorgegebenen Protokoll übertragen werden und von einem Protokollwächter überprüft werden, in Form von digitalen Signalfolgen, die ein Identifikationsfeld mit einer Adresse und ein Datenfeld aufweisen, dadurch gekennzeichnet, daß sie außerhalb des Protokollwächters ein Identifikations-Auswahlteil (1) aufweist, eine Verbindungsanordnung (2) zwischen dem Protokollwächter und dem Auwahlteil zum Beaufschlagen des Teils mit dem Identifikationsfeld einer im Wächter überprüften Signalfolge, einen programmierten Speicher im Auswahlteil (1), der mit einer oder mehreren vorgegebenen zu erkennenden Identifikationen beaufschlagt wird, und einer Anordnung zum Vergleichen der erhaltenden Identifikationen und der abgespeicherten Identifikationen, um ein Signal ADE zu bilden für den Protokollwächter, welches eine Aussage enthält, ob ein empfangenes Feld erkannt worden ist oder nicht.

2. Vorrichtung nach Anspruch 1, dadurch gekennzeichnet, daß die Verbindungsanordnung eine serielle Verbindung SERI zwischen dem Protokollwächter und dem Auswahlteil für die Identifikation herstellt.

3. Vorrichtung nach Anspruch 2, dadurch gekennzeichnet, daß die serielle Verbindung ein zwischengeschaltetes Schieberegister (2) aufweist, welches die empfangenen Signale in der Reihenfolge verändert, um das Auswahlteil (1) mit einer parallen Verbindung zu beaufschlagen.

4. Vorrichtung nach Anspruch 3, dadurch gekennzeichnet, daß der Protokollwächter eine Anordnung aufweist zur Erzeugung eines Zeitsignals CKB, welches die Beaufschlagung des Schieberegisters zeitlich steuert.

5. Vorrichtung nach einem der Ansprüche 1 bis 4, dadurch gekennzeichnet, daß die Signalfolgen zwischen dem Identifikationsfeld und dem Datenfeld ein Feld COM aufweisen mit einem Bit RAK, welches für eine Bestätigungsanforderung der Folge steht, das vom Sender dieser Folge erstellt wird, dadurch gekennzeichnet, daß die Verbindungsanordnung das Feld COM mit dem Identifikationsfeld in das Auswahlteil übermittelt, wobei das Auswahlteil eine Anordnung zur Erkennung des Zustandes des Bits RAK aufweist und eine Anordnung zur Übertragung zum Protokollwächter eines diesen Zustand darstellenden Signals AKE.

6. Vorrichtung nach Anspruch 5, dadurch gekennzeichnet, daß sie eine Anordnung aufweist, um das Signal AKE in denjenigen Zustand zu überführen, welcher dem Fehlen der Bestätigungsanforderung einer Signalfolge entspricht, unabhängig vom Zustand des Bits RAK der Bestätigungsanforderung einer vom Protokollwächter übermittelten Signalfolge.

7. Vorrichtung nach einem der Ansprüche 1 bis 6, dadurch gekennzeichnet, daß der Protokollwächter eine Anordnung aufweist zur Erzeugung eines Signals ADE zur Aktivierung der Beaufschlagung des Auswahlteils mit der Folge und zur Deaktivierung dieser Beaufschlagung nach Beaufschlagung mit einer vorgegebenen Anzahl von Bits dieser Folge, die wenigstens dem Identifikationsfeld entsprechen.

8. Vorrichtung nach Anspruch 7 in Kombination mit Anspruch 3, dadurch gekennzeichnet, daß das Signal ADE die Beaufschlagung nach der Übertragung des Feldes COM deaktiviert.

**Claims**

1. Device for recognition of addresses for an electronic module for processing data transmitted according to a pre-determined protocol, verified by a protocol controller, in the form of frames of digital signals comprising an identifier field containing an address and a data field, characterised in that it comprises a unit for selecting an identifier (1) external to the protocol controller, means (2) for connecting the protocol controller and the selection unit for loading the unit with the field identifying a signal frame examined in the controller, a random access memory provided in the selection unit (1) for being loaded with one or more pre-determined identifiers to be recognised and means for comparing the identifiers received and the identifiers placed in the memory to form a signal (ADE) intended for the protocol controller and representative of whether the field received is recognised or not.

2. Device according to claim 1, characterised in that the connecting means forms a serial connection (SERI) between the protocol controller and the identifier selection unit.

3. Device according to claim 2, characterised in that the serial connection comprises an intermediate shift register (2) which deserialises the signals received in order to load the selection unit (1) by a parallel connection.

4. Device according to claim 3, characterised in that the protocol controller comprises means for generating a clock signal (CKB) which clocks the loading of the shift register.

5. Device according to any one of claims 1 to 5, used with signal frames, comprising, between the identifier field and the data field, a field (COM) containing a bit (RAK) signifying a request for acknowledgement of the frame, made by the transmitter of said frame, characterised in that the connecting means transmits the field (COM) with the identifier field in the selection unit, the selection unit comprising means for recognising the state of the bit (RAK) and means for transmitting a signal (AKE) representing this state to the protocol controller.

6. Device according to claim 5, characterised in that it comprises means to force the signal (AKE) into the state which corresponds to an absence of a request for acknowledgement of a signal frame, irrespective of the state of the bit (RAK) for requesting an acknowledgement of a signal frame transmitted by the protocol controller.

7. Device according to any one of claims 1 to 6, characterised in that the protocol controller comprises means for generating a signal (ADE) for activating the loading of the frame into the selection unit and for de-activating this loading after loading of a predetermined number of bits of this frame, corresponding at least to the identifier field.

8. Device according to claim 7, in combination with claim 5, characterised in that the signal (ADE) de-activates the loading after the transmission of the field (COM).

BUS
MULTIPLEXE
DATA
$\overline{\text{DATA}}$

APPLICATION

EMETTEUR
RECEPTEUR
DE
LIGNE

DR

DE

CONTROLEUR
DE
PROTOCOLE

ADE
AKE
SERI
CKB
ADA

RECONNAIS-
SANCE EX-
TERNE

FIG.:1

RECONNAISSANCE EXTERNE

CONTROLEUR
DE
PROTOCOLE

AKE
ADE
SERI
CKB
ADA

REGISTRE A DECALAGE

2

16
bits

1

ORGANE
DE
SELECTION
D'IDENTIFICATEUR

FIG.:2

SOF    IDEN         COM    DAT

DI

EXT  RAK   R/W   RTR

SERI

FIG.:3
CKB

FIN 20$^{\text{éme}}$bit

ADA

ADE

AKE